# EUROPEAN PATENT APPLICATION

(11) **EP 4 755 736 A1**
(43) Date of publication of application: **10.06.2026**
(21) Application number: 24217618.8
(22) Date of filing: 04.12.2024
(51) Int. Cl.: B60T 8/17

(54) **SECONDARY BRAKE SYSTEM FUNCTIONALITY**

(71) Applicant: Volvo Truck Corporation, 405 08 Göteborg (SE)
(72) Inventor: THAI, Vi Cuong, HISINGS BACKA (SE); RAKHOLIA, Meet Vitthalbhai, MÖLNDAL (SE); ESSAYEH, Salmane, GÖTEBORG (SE); MÖLLER, Daniel, ALE (SE)
(74) Representative: Ström & Gulliksson AB

(57) **Abstract**

A computer-implemented method is disclosed, which is suitable for a vehicle comprising a primary brake system and a secondary brake system, wherein each of the primary and secondary brake systems is configured to control one or more brake actuators of the vehicle.

The method comprises enabling the secondary brake system, triggering braking control by the secondary brake system, and obtaining measurements of an output of the secondary brake system, wherein the output is for control of the one or more brake actuators, and wherein the measurements are indicative of a response of the secondary brake system to the triggered braking control. The method also comprises determining a functionality of the secondary brake system by comparing the measurements of the output of the secondary brake system to a corresponding output of the primary brake system.

Corresponding computer system, vehicle, computer program product, and non-transitory computer-readable storage medium are also disclosed.

## Description

### TECHNICAL FIELD

The disclosure relates generally to vehicle safety. In particular aspects, the disclosure relates to secondary brake system functionality. The disclosure can be applied to heavy-duty vehicles, such as trucks, buses, and construction equipment, among other vehicle types. Although the disclosure may be described with respect to a particular vehicle, the disclosure is not restricted to any particular vehicle. The approaches as described and exemplified herein are particularly suitable for autonomous, or semi-autonomous, vehicles.

### BACKGROUND

In addition to a default (primary) brake system, a vehicle may be equipped with a secondary brake system. The secondary brake system may be beneficial, for example, if the default brake system malfunctions. To this end, it may be important to ensure that the secondary brake system functions appropriately.

Thus, there is a need for approaches for determination of the functionality of a secondary brake system.

### SUMMARY

According to a first aspect of the disclosure, a computer system is provided for a vehicle comprising a primary brake system and a secondary brake system, wherein each of the primary and secondary brake systems is configured to control one or more brake actuators of the vehicle. The computer system comprises processing circuitry configured to enable the secondary brake system, trigger braking control by the secondary brake system, and obtain measurements of an output of the secondary brake system. The output is for control of the one or more brake actuators, and the measurements are indicative of a response of the secondary brake system to the triggered braking control. The processing circuitry is also configured to determine a functionality of the secondary brake system by comparing the measurements of the output of the secondary brake system to a corresponding output of the primary brake system. The first aspect of the disclosure may seek to enable determination of the functionality of a secondary brake system. A technical benefit may include improved vehicle safety.

According to a second aspect of the disclosure, a vehicle is provided, which comprises the computer system of the first aspect, the one or more brake actuators, the primary brake system, and the secondary brake system. The second aspect of the disclosure may seek to provide a vehicle where the functionality of a secondary brake system can be conveniently determined. A technical benefit may include improved vehicle safety.

According to a third aspect of the disclosure, a computer-implemented method is provided for a vehicle comprising a primary brake system and a secondary brake system, wherein each of the primary and secondary brake systems is configured to control one or more brake actuators of the vehicle. The method comprises enabling (by processing circuitry of a computer system) the secondary brake system, triggering (by the processing circuitry) braking control by the secondary brake system, and obtaining (by the processing circuitry) measurements of an output of the secondary brake system. The output is for control of the one or more brake actuators, and the measurements are indicative of a response of the secondary brake system to the triggered braking control. The method also comprises determining (by the processing circuitry) a functionality of the secondary brake system by comparing the measurements of the output of the secondary brake system to a corresponding output of the primary brake system. The third aspect of the disclosure may seek to enable determination of the functionality of a secondary brake system. A technical benefit may include improved vehicle safety.

Optionally in some examples, including in at least one preferred example, the method may further comprise obtaining (by the processing circuitry) measurements of an applied brake force by the one or more brake actuators responsive to the triggered braking control by the secondary brake system. A technical benefit may include that additional information relating to the functionality of the secondary brake system is acquired.

Optionally in some examples, including in at least one preferred example, the method may further comprise disabling (by the processing circuitry) the one or more brake actuators before triggering braking control by the secondary brake system. A technical benefit may include the determination of functionality of the secondary brake system can be performed without actual braking force application. For example, this may enable/facilitate determination of functionality of the secondary brake system while the vehicle is in motion.

Optionally in some examples, including in at least one preferred example, the method may further comprise - when the secondary brake system is determined as functional - enabling (by the processing circuitry) the one or more brake actuators, triggering (by the processing circuitry) further braking control by the secondary brake system, and obtaining (by the processing circuitry) measurements of an applied brake force by the one or more brake actuators responsive to the triggered further braking control by the secondary brake system. A technical benefit may include that additional information relating to the functionality of the secondary brake system is acquired, while the secondary brake system is only allowed to control the actuators when the output of the secondary brake system indicates acceptable functionality.

Optionally in some examples, including in at least one preferred example, determining the functionality of the secondary brake system may further comprise comparing (by the processing circuitry) the measurements of the applied brake force by the one or more brake actuators responsive to the triggered braking control, or further braking control, by the secondary brake system to a corresponding brake force for the primary brake system. A technical benefit may include that the determination of functionality of the secondary brake system is improved (e.g., in terms of accuracy, reliability, etc.) compared to only the output for control of the brake actuators being considered.

Optionally in some examples, including in at least one preferred example, the method may further comprise one or more of: storing (by the processing circuitry) the measurements in association with a time stamp, and storing (by the processing circuitry) the determined functionality of the secondary brake system in association with a time stamp. A technical benefit may include that the determination of functionality of the secondary brake system may be based on several occasions of measurements (e.g., corresponding to different time stamps), which may improve the determination (e.g., in terms of accuracy, reliability, etc.). For example, the risk of false detection of malfunction may be decreased due to smoothing effects.

Optionally in some examples, including in at least one preferred example, the method may further comprise acquiring (by the processing circuitry) a request for evaluation of the secondary brake system, wherein enabling the secondary brake system is responsive to the request. A technical benefit may include that the determination of functionality of the secondary brake system may be flexibly scheduled.

Optionally in some examples, including in at least one preferred example, the method may be performed while the vehicle is in motion. A technical benefit may include that the determination of functionality of the secondary brake system may be performed more often (or with less latency) than otherwise and/or in situations otherwise not available for determination of functionality of the secondary brake system.

Optionally in some examples, including in at least one preferred example, the method may further comprise - when the secondary brake system is determined as non-functional - causing (by the processing circuitry) a safety enhancing action. A technical benefit may include improved vehicle safety.

Optionally in some examples, including in at least one preferred example, the safety enhancing action may comprise one or more of: performing a safe stop maneuver by the vehicle, alerting an operator of the vehicle, and disabling an autonomous drive mode of the vehicle. A technical benefit may include improved vehicle safety.

Optionally in some examples, including in at least one preferred example, the method may further comprise acquiring (by the processing circuitry) identification of a situation considered safe for brake system evaluation, wherein enabling the secondary brake system is performed automatically when the vehicle is in the identified situation. A technical benefit may include that the determination of functionality of the secondary brake system may be performed more often (or with less latency) than otherwise and/or in situations otherwise not available for determination of functionality of the secondary brake system (e.g., as soon as possible after a request for evaluation of the secondary brake system has ben acquired), while the secondary brake system is not enabled in un-safe situations.

According to a fourth aspect of the disclosure, a computer program product is provided, which comprises program code for performing, when executed by the processing circuitry, the method of the third aspect.

According to a fifth aspect of the disclosure, a non-transitory computer-readable storage medium comprising instructions is provided, which when executed by the processing circuitry, cause the processing circuitry to perform the method of the third aspect.

The fourth and/or fifth aspect of the disclosure may seek to convey program code for enabling or improving vehicle safety. A technical benefit may include that new vehicles and/or legacy vehicles may be conveniently configured, by software installation/update, to enable the secondary brake system, trigger braking control by the secondary brake system, obtaining measurements of an output of the secondary brake system (wherein the output is for control of the one or more brake actuators, and the measurements are indicative of a response of the secondary brake system to the triggered braking control), and determining a functionality of the secondary brake system by comparing the measurements of the output of the secondary brake system to a corresponding output of the primary brake system.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

### BRIEF DESCRIPTION OF THE DRAWINGS

Examples are described in more detail below with reference to the appended drawings.
**FIG. 1** is a schematic drawing illustrating a vehicle according to some examples.
**FIG. 2** is a schematic block diagram illustrating primary and secondary brake systems according to some examples.
**FIG. 3** is a flowchart illustrating a method according to some examples.
**FIG. 4** is a schematic diagram illustrating a computer system for implementing examples disclosed herein according to some examples.
**FIG. 5** is a schematic drawing illustrating a computer program product in the form of a non-transitory computer-readable storage medium according to some examples.
**FIG. 6** is a schematic block diagram of a control unit according to some examples.

### DETAILED DESCRIPTION

The detailed description set forth below provides information and examples of the disclosed technology with sufficient detail to enable those skilled in the art to practice the disclosure.

As already mentioned, a vehicle may be equipped with a secondary brake system in addition to a default (primary) brake system. This approach provides redundancy. For example, if the primary brake system malfunctions (or has deteriorated performance), the secondary brake system may be instructed to take over braking control. Alternatively or additionally, the approach can increase the vehicle "up-time" (e.g., the time that the vehicle is considered as functional) and/or improve vehicle safety.

It may be important to ensure that the secondary brake system functions appropriately. For example, it may be beneficial if the secondary brake system has been determined as functional when the secondary brake system is instructed to take over braking control.

Preferably, the secondary brake system should have been determined as functional as recently as possible when the secondary brake system is instructed to take over braking control (without unnecessarily delay of the takeover by the secondary brake system). Thus, frequent repetitive evaluation of the functionality of the secondary brake system may be beneficial.

Furthermore, it may be important that evaluation of the functionality of the secondary brake system is conducted in a safe manner (e.g., only in stations where it is considered safe to disable the primary brake system.

Approaches as described and exemplified herein aim to provide approaches for determination of the functionality of a secondary brake system. Some approaches as described and exemplified herein aim to enable frequent and safe evaluation of the functionality of the secondary brake system.

Thus, according to some examples, the approaches as described and exemplified herein are suitable for a vehicle comprising a primary brake system configured to control the brake actuators of the vehicle under default conditions and a secondary brake system configured to control the brake actuators of the vehicle when the primary brake system should not be used (e.g., is unavailable or malfunctioning).

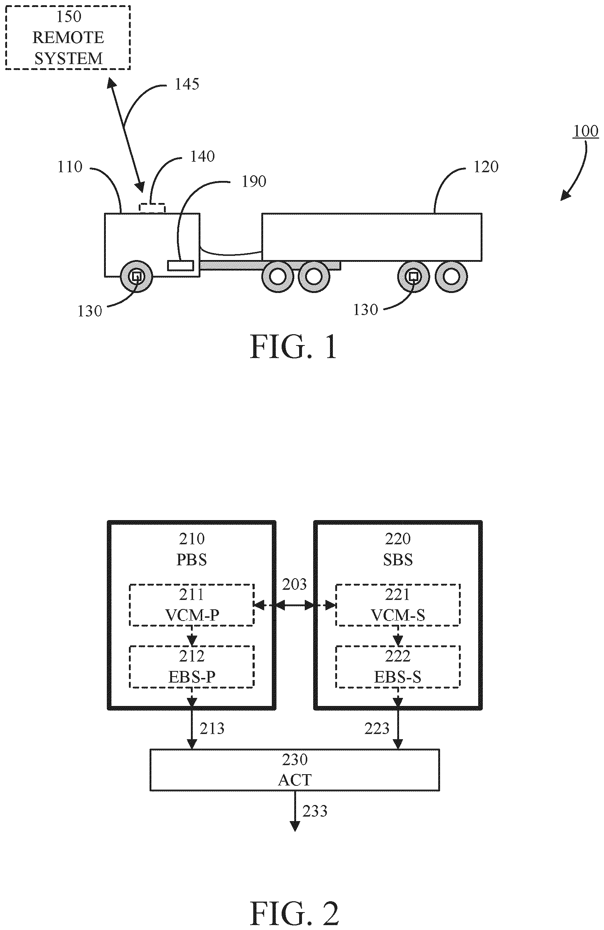

**FIG. 1** schematically illustrates an example vehicle **100** for cargo transport where the techniques disclosed herein can be advantageously applied. The vehicle **100** comprises a truck/tractor/towing unit **110** configured to tow one or more trailer unit(s) **120** in a known manner. The tractor unit **110** and/or the trailer unit(s) **120** may comprise a vehicle control unit (VCU) **190** configured to perform various vehicle control functions, such as vehicle motion management (VMM), etc.

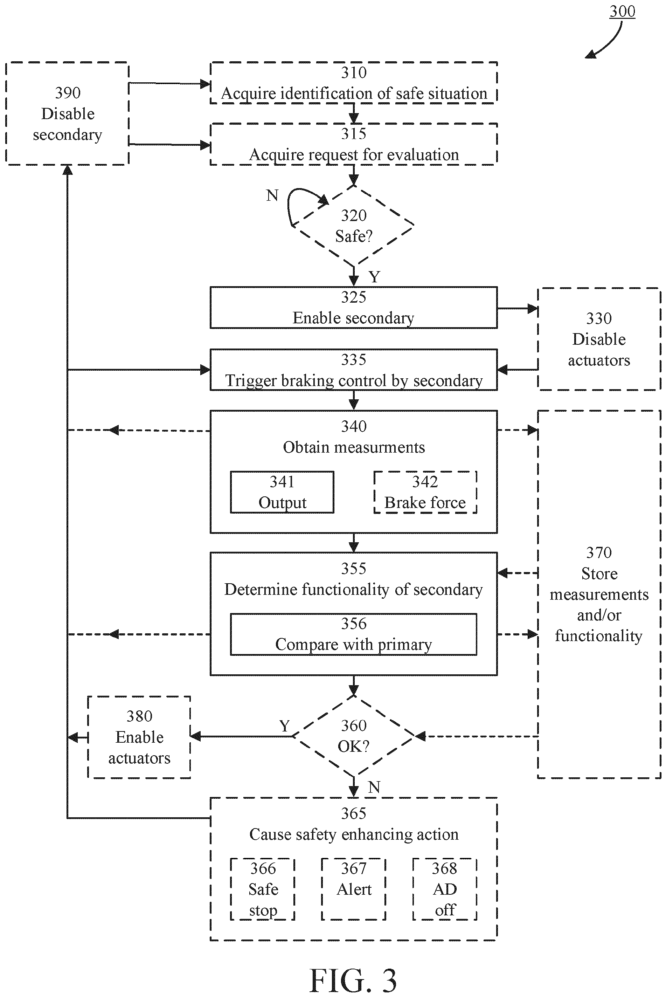

Any of one or more VCU(s) **190** may be configured to perform, or cause performance of, the techniques disclosed herein. For example, the VCU **190** may be configured to perform the method **300** described herein in connection to **FIG. 3****.**

To this end, the VCU **190** may be configured to control a primary brake system and a secondary brake system, wherein each of the primary and secondary brake systems is configured to control one or more brake actuators **130** of the vehicle **100.** Each of the primary and secondary brake systems may be (fully or partially) comprised in the VCU **190,** or otherwise associated therewith (e.g., connected, or connectable to, the VCU **190**).

In a typical implementation, the primary brake system and the secondary brake system are for electronic braking (e.g., using one or more electronic motor(s)). Generally, it should be noted that the vehicle **100** may also comprise other types of brake systems (e.g., service brakes, trailer brakes, parking brakes, etc.).

The vehicle **100** may, in some examples, be configured to communicate with a remote system **150,** as illustrated by **145.** To this end, the tractor unit **110** and/or the trailer unit(s) **120** may be equipped with a communication device **140** (e.g., a wireless transceiver) configured to implement communication with the remote system **150.**

**FIG. 2** schematically illustrates a primary brake system (PBS) **210** and a secondary brake system (SBS) 220 according to some examples. Each of the primary and secondary brake systems **210, 220** is configured to control one or more brake actuators (ACT) **230** (compare with **130** of **FIG. 1**).

To this end, the primary brake system **210** is configured to provide an output **213,** which is for control of the one or more brake actuators **230,** and the secondary brake system **220** is configured to provide an output **223,** which is for control of the one or more brake actuators **230.** For example, the outputs **213, 223** may be any suitable control signals compatible with one or more brake actuators **230.**

The one or more brake actuators **230** are configured to apply a respective brake force **233** in correspondence with the applicable one of the outputs **213, 223.** Typically, for any specific moment in time, each brake actuator **230** only complies with one of the outputs **213, 223** (e.g., corresponding to the currently enabled one of the primary and secondary brake systems).

There is, typically, provided functionality for switching between the primary and secondary brake systems, as illustrated schematically by **203.** For example, such functionality may be implemented by a VCU (compare with **190** of **FIG. 1**).

Generally, switching between the primary and secondary brake systems includes any suitable approach that dynamically causes only one of the primary and secondary brake systems to be in control of each actuator **230** at a time. For example, switching between the primary and secondary brake systems may comprise enabling one of the primary and secondary brake systems while the other is disabled, in which case the actuator(s) **230** may be controlled by the enabled brake system or may be temporarily un-controlled. Alternatively or additionally, switching between the primary and secondary brake systems may comprise enabling both of the primary and secondary brake systems, in which case the actuator(s) **230** may be controlled by only one of enabled brake systems. Generally, a disabled brake system has no control over the actuator(s) **230,** while an enabled brake system may - or may not - be in control of the actuator(s) **230.**

As exemplified in **FIG. 2****,** the primary brake system **210** may comprise a primary vehicle control module (VCM-P; or primary brake control module) **211** and a primary electronic brake system (EBS-P) **212,** and the secondary brake system **220** may comprise a secondary vehicle control module (VCM-S; or secondary brake control module) **221** and a secondary electronic brake system (EBS-S) **222.**

For example, the primary and secondary vehicle control modules **211, 221** may be comprised in a same VCU, or in different - first and second, respectively - VCU:s. Alternatively or additionally, the primary and secondary vehicle control modules **211, 221** may be comprised in a vehicle motion management (VMM) function.

Each of the primary and secondary electronic brake systems **212, 222** may be implemented by a VCU or by a separate device (e.g., a device closely associated with the actuator(s), for example, in terms of one or more of: location, function, response time, etc.). For example, each of the primary and secondary electronic brake systems **212, 222** may be an electronic control unit (ECU) configured to communicate directly with (e.g., directly controlling) the brake actuator(s) **230.**

Generally, each of the primary and secondary electronic brake systems (EBS-P, EBS-S) **212, 222** may be seen as an interface between the corresponding VCM and the actuator(s) **230.** The interface may be passively relaying information, or it may contribute actively to the control function.

In some examples, an electronic brake system may be configured to receive high level brake request(s) (e.g., brake pedal position, an acceleration request, or similar), convert the received high level brake request(s) to brake control instructions (e.g., brake pressure to be applied), and provide the brake control instructions to the actuator(s) for execution. In some examples, an electronic brake system may be configured to implement a control loop together with the actuator(s), wherein the control loop is adapted to implement high level brake request(s). In some examples, an electronic brake system may be configured to handle an electronic stability program (ESP) while implementing high level brake request(s).

**FIG. 3** illustrates a method **300** according to some examples. The method **300** is computer-implemented; performed by processing circuitry of a computer system. For example, the method **300** may be performed by a VCU (compare with **190** of **FIG. 1**). The method **300** is suitable for a vehicle comprising a primary brake system (compare with **210** of **FIG. 2**) and a secondary brake system (compare with **220** of **FIG. 2**), wherein each of the primary and secondary brake systems is configured to control one or more brake actuators (compare with **230** of **FIG. 2**) of the vehicle.

As illustrated by **325,** the method **300** comprises enabling the secondary brake system for functionality evaluation.

In some examples, the primary brake system is disabled while the secondary brake system is enabled. In some examples, the primary brake system remains enabled while the secondary brake system is enabled. In some examples, the primary brake system remains enabled during a first stage of functionality evaluation of the secondary brake system and is disabled during a second stage of functionality evaluation of the secondary brake system. As already mentioned, at each moment in time, at most (only) one (enabled) brake system is in control of the actuator(s).

It should be noted that the secondary brake system may be enabled for functionality evaluation when the vehicle is at standstill, as well as when the vehicle is in motion. This has the benefit that the time instants for functionality evaluation can be selected flexibly (e.g., enabling relatively frequent evaluation). Thereby, the information regarding functionality of the secondary brake system may have been updated relatively recently at any point in time. That the vehicle is in motion may be defined in any suitable way. For example, that the vehicle is in motion may be defined as the vehicle being not at complete standstill, as the vehicle moving with a speed that exceeds a motion threshold value, as the vehicle being en route, etc.

After enablement of the secondary brake system, the method **300** comprises triggering braking control by the secondary brake system, as illustrated by **335.**

Generally, the braking control may comprise any suitable vehicle control action that involves braking and may be expressed by any suitable desired response (e.g., in terms of one or more of: a brake force, a brake torque, a deceleration, a yaw change, etc.).

Then, the method **300** comprises obtaining measurements of an output of the secondary brake system (compare with **223** of **FIG. 2**), as illustrated by **340** and **341.**

The output of the secondary brake system is for control of the one or more brake actuators. When the secondary brake system is in control of the actuator(s), the output may be provided to the brake actuator(s). When the secondary brake system is not in control of the actuator(s) (e.g., when the actuator(s) are disabled, or when the primary brake system is in control of the actuator(s)), the output is not actually provided to the brake actuator(s).

The measurements may be obtained in any suitable way. For example, the output of the secondary brake system may be operatively connected to the processing circuitry performing the method **300;** thereby enabling the obtainment. In some examples, the processing circuitry performing the method **300** may receive the content of the output and perform measurements thereon (e.g., extract information indicating whether, and/or to what extent, the secondary brake system is able to provide an output that can cause adequate braking by the actuator(s)). In some examples, there may be measurement circuitry (e.g., a suitable sensor) configured to perform measurements on the content of the output and to provide the measurements to the processing circuitry performing the method **300.**

The measurements of the output of the secondary brake system in **340, 341** are indicative of a response of the secondary brake system to the triggered braking control in **335.** As a consequence, the measurements are indicative of an ability of the secondary brake system to apply braking force via the actuator(s), and can be used to evaluate the functionality of the secondary brake system.

As illustrated by **355** and **356,** the method **300** comprises determining a functionality of the secondary brake system by comparing the measurements of the output of the secondary brake system to a corresponding output of the primary brake system (compare with **213** of **FIG. 2**).

Typically, the corresponding output of the primary brake system is the output generated by the primary brake system if triggered in the same way as the secondary brake system was in **335.** The corresponding output of the primary brake system may be hypothetical or actual. For example, if the primary brake system is currently disabled, the corresponding output of the primary brake system may be a previously collected output, or a default output (e.g., an output stipulated by a specification). If the primary brake system is currently enabled, the corresponding output of the primary brake system may be a previously collected output, a default output, or a currently collected output.

The comparison in **356** may be any suitable comparison and the functionality of the secondary brake system may be determined in any suitable way in **355.** In some examples, the measurements of the output of the secondary brake system are represented by a secondary output metric value, and the secondary output metric value is compared to a primary output metric value (or range of primary output metric values) representing the corresponding output of the primary brake system.

In some examples, the functionality of the secondary brake system is determined as acceptable (i.e., the secondary brake system is determined as functional) when the secondary output metric value is equal to the primary output metric value. In some examples, the functionality of the secondary brake system is determined as acceptable when the absolute value of a difference between the secondary output metric value and the primary output metric value is less than a threshold value. In some examples, the functionality of the secondary brake system is determined as acceptable when the secondary output metric value falls within the range of primary output metric values.

The functionality of the secondary brake system may be expressed in terms of a binary determination (e.g., functional, non-functional), or in terms of more than two determination levels (e.g., fully functional, partially functional, non-functional). In the latter case, more than one threshold value for the absolute value of a difference between the secondary output metric value and the primary output metric value, or more than one range of primary output metric values, may be applied to discriminate between the determination levels.

The metric values may relate to any suitable metric which is derivable/extractable from the outputs **213, 223.** For example, the metric values may be indicative of one or more characteristics of an actuator control signal conveyed by the outputs **213, 223.** Alternatively or additionally, the metric values may be indicative of one or more characteristics (e.g., magnitude, duration, shape, etc.) of an intended brake action to be caused by the outputs **213, 223.**

The functionality of the secondary brake system may be evaluated as an overall functionality for all the actuators, as a functionality per actuator, or as a functionality per subset of actuators.

When the secondary brake system is determined as functional (Y-path out of **360**), the method **300** may return to a portion of the method **300** where new/further evaluation of the functionality of the secondary brake system may be awaited/performed.

When the secondary brake system is determined as non-functional (N-path out of 360), the method **300** comprises causing a safety enhancing action, as illustrated by **365.** For example, a safety enhancing action may be caused by transmitting a control signal to one or more device(s) configured to perform the safety enhancing action. Generally, the safety enhancing action may comprise any one or more action(s) suitable for enhancing vehicle safety.

For example, the safety enhancing action may comprise performing a safe stop maneuver by the vehicle as illustrated by **366.** In some examples, a safe stop maneuver may be performed using the primary brake system and/or another brake system (e.g., service brakes, trailer brakes). In some examples, a safe stop maneuver may be performed while imposing a relatively restrictive speed limit. The safe stop maneuver is particularly useful for vehicles without a driver, but may be applied also for driver operated vehicles.

Alternatively or additionally, the safety enhancing action may comprise alerting an operator of the vehicle as illustrated by **367.** In some examples, when the vehicle has a driver, the operator (driver) of the vehicle may be alerted via a user interface comprised in the vehicle. In some examples, when the vehicle is configured for remote control, the operator of the vehicle (e.g., a remote control function, a vehicle assistance service, or the like) may be alerted via communication between the vehicle and a remote system (compare with **150** of **FIG. 1**).

Yet alternatively or additionally, the safety enhancing action may comprise disabling an autonomous drive (AD) mode of the vehicle as illustrated by **368.** In some examples, the autonomous drive mode may be disabled at vehicle startup if a current or previous functionality evaluation determines the secondary brake system as non-functional. In some examples, the autonomous drive mode may be disabled when a safe stop maneuver is completed. In some examples, the autonomous drive mode may be disabled when the vehicle is in motion after an operator of the vehicle (e.g., a driver or a remote control function) has been alerted and has confirmed takeover of the vehicle control.

When there are more than two determination levels in **355** and the secondary brake system is determined as partially functional, the N-path or the Y-path out of **360** may be pursued. In some examples, the Y-path out of **360** may be pursued if the partial functionality is only recently determined, while the N-path out of **360** may be pursued if the partial functionality has been repeatedly determined over a relatively longer period of time.

When the N-path out of **360** is pursued, the number and type(s) of safety enhancing action(s) to be caused in **365** may be based on the determined level of functionality. For example, partial functionality may entail only an operator alert **367,** while non-functionality may entail a safe stop maneuver **365** and/or disabling of autonomous drive mode **368**.

When the Y-path out of **360** is pursued and the method **300** returns to **310** or **315,** the secondary brake system may be disabled, as illustrated by **390.** Typically, **390** may also comprise enabling the primary brake system if it has been disabled (e.g., in association with 325) and/or handing over the control of the actuator(s) to the primary brake system.

As illustrated by **340** and **342,** the method **300** may, in some examples, also comprise obtaining measurements of brake force (compare with **233** of **FIG. 2**) actually applied by the actuator(s) responsive to the triggered in **335** (i.e., when the secondary brake system is in control of the actuator(s)). The applied brake force measurements may be beneficial to improve the functionality evaluation.

In some examples, there is no collection of brake force measurements. This may be beneficial since there is no need to apply any brake force to conduct the functionality evaluation, which increases the flexibility regarding when, and under what circumstances the functionality evaluation may be performed.

The brake force measurements may be obtained in any suitable way. For example, the applied brake force by the secondary brake system may be measured by a suitable sensor operatively connected to the processing circuitry performing the method **300,** and the processing circuitry performing the method **300** may receive the measurements from the sensor. Examples of suitable sensors include a pressure sensor (e.g., configured to measure brake vault pressure, or otherwise how much pressure is applied for the brakes) and an accelerometer (e.g., configured to measure that, and/or how much, deceleration is achieved).

The measurements of the applied brake force by the secondary brake system in **340, 342** are indicative of a response of the secondary brake system to the triggered braking control in **335.** As a consequence, the measurements are indicative of an ability of the secondary brake system to apply braking force via the actuator(s), and can be used to evaluate the functionality of the secondary brake system.

In some examples, the measurements of applied brake force **342** are collected in parallel to the measurements of the output of the secondary brake system **341.** In these examples, the secondary brake system is given control of the actuator(s) in association with **325.** A benefit of this approach is that a relatively large amount of information can be collected in a relatively short time.

In some examples, the measurements of applied brake force **342** are collected after the measurements of the output of the secondary brake system **341.** For example, a preliminary functionality evaluation may be performed based on measurements of the output of the secondary brake system **341** and, when the preliminary evaluation indicates (full or partial) functionality, further functionality evaluation may be performed based on measurements of applied brake force **342.**

In these examples, the actuator(s) may be disabled before triggering braking control by the secondary brake system, as illustrated by **330** (or may be left under control by the primary brake system). Disabling of the actuator(s) may, for example, be implemented by not providing any of the brake system outputs **213, 223** to the actuator(s) or by configuring the actuator(s) to not react to the brake system outputs **213, 223.** While the actuator(s) associated with the primary and secondary brake systems are disabled, other brake systems of the vehicle (e.g., service brakes, trailer brakes, parking brakes, etc.) may be applied as/if needed. Then, when the preliminary evaluation indicates (full or partial) functionality, the actuator(s) may be enabled again before triggering braking control by the secondary brake system for the further functionality evaluation, as illustrated by **380** (or may be handed over to control by the secondary brake system). Furthermore, the actuator(s) may be enabled again as/if needed for any safety enhancing action in **365,** and/or in association with the secondary brake system being disabled in **390.**

Thus, when the secondary brake system is (preliminarily) determined as functional based on measurements of the output of the secondary brake system **341** (Y-path out of **360**), the secondary brake system may be given control of the actuator(s), further braking control may be triggered in **335,** and brake force measurements may be obtained in **342** for further functionality evaluation in **355.** When the secondary brake system is (preliminarily) determined as non-functional based on measurements of the output of the secondary brake system **341** (N-path out of **360**), a safety enhancing action may be caused as exemplified earlier.

A benefit of this approach is that the secondary brake system is only given control of the actuator(s) when it is preliminarily determined as functional, which increases vehicle safety.

Regardless of when the measurements of applied brake force **342** are collected, they may be used to determine the functionality of the secondary brake system in **335.** The measurements of applied brake force may be used for a separate functionality determination based only on applied brake force, or they may be used in combination with the measurements of the output of the secondary brake system to for a combined functionality determination (e.g., an update of the preliminary functionality evaluation).

To this end, **355** and **356** may comprise determining a functionality of the secondary brake system by comparing the measurements of the applied brake force to a corresponding brake force for the primary brake system.

Typically, the corresponding brake force for the primary brake system is the brake force applied when the primary brake system controls the actuator(s) and is triggered in the same way as the secondary brake system was in **335.** The corresponding brake force for the primary brake system may be hypothetical or actual. For example, the corresponding brake force for the primary brake system may be a previously collected brake force, or a default brake force (e.g., a brake force stipulated by a specification).

The comparison in **356** may be any suitable comparison and the functionality of the secondary brake system may be determined in any suitable way in **355.** In some examples, the measurements of the brake force for the secondary brake system (possibly in any suitable combination with the measurements of the brake force for the secondary brake system) are represented by a secondary brake force metric value, and the secondary brake force metric value is compared to a primary brake force metric value (or range of primary brake force metric values) representing the corresponding brake force for of the primary brake system.

In some examples, the functionality of the secondary brake system is determined as acceptable (i.e., the secondary brake system is determined as functional) when the secondary brake force metric value is equal to the primary brake force metric value. In some examples, the functionality of the secondary brake system is determined as acceptable when the absolute value of a difference between the secondary brake force metric value and the primary brake force metric value is less than a threshold value. In some examples, the functionality of the secondary brake system is determined as acceptable when the secondary brake force metric value falls within the range of primary brake force metric values.

As already explained, the functionality of the secondary brake system may be expressed in terms of a binary determination, or in terms of more than two determination levels.

As illustrated by **315,** the method may comprise acquiring a request for evaluation of the secondary brake system. In some examples, the request for evaluation may be received (e.g., from a driver, or from another vehicle operator) via a user interface comprised in the vehicle. In some examples, when the vehicle is configured for remote control, the request for evaluation may be received (e.g., from a remote control function, from a vehicle assistance service, or the like) via communication between the vehicle and a remote system (compare with **150** of **FIG. 1**). In some examples, the request for evaluation may be received from an evaluation scheduling function (e.g., autonomous drive, route planner, or the like) which may be comprised in the vehicle or in a remote system. The scheduling function may, for example, request evaluation periodically and/or responsive to an event (e.g., vehicle startup, specified time since last evaluation, indication of performance problems of the primary brake system, etc.). The scheduling function may be seen as providing automatic functionality evaluation.

The enabling of the secondary brake system in **325** may be responsive to the request in **315.** In some examples, **325** is performed in direct association with the request for evaluation. In some examples, **325** is performed responsive to the request for evaluation, but only when a safety condition is fulfilled as illustrated by **320.**

Typically, the measurements of secondary brake system output **341** may be obtained at any time (since the primary brake system may stay in control of the actuator(s) and no actual brake force application by the secondary brake system is needed). In some examples, however, the measurements of secondary brake system brake force **342** may be obtained only under some circumstances (e.g., situation(s) considered safe for brake system evaluation). Such circumstances are exemplified herein via a safety condition as illustrated by **320.**

The safety condition may define any suitable one or more situation(s) considered safe for brake system evaluation ("safe situation"); for example, where no braking is considered necessary, or where another brake system (e.g., service brakes, trailer brakes, parking brakes, etc.) is available to provide sufficient braking.

Some examples of "safe situation(s)" may include: when the vehicle is not moving (due to, e.g., traffic light, junction, stop sign, fueling, charging, pickup, delivery, etc.), when the vehicle is not moving and another brake system (e.g., service brakes, trailer brakes, parking brakes, etc.) is applied, when the vehicle is not moving and experiences no (or relatively small) slope, when the vehicle is in motion and another brake system (e.g., service brakes, trailer brakes) is available, and when the vehicle is in motion and experiences no (or relatively small) downhill slope in the direction of movement. In some examples, "safe situation(s)" may be - alternatively or additionally - defined by local conditions and/or time; e.g., no (or relatively little) traffic, (relatively) straight road ahead, (relatively) non-slippery conditions, etc.

In some examples, definition(s) of "safe situation(s)" may be predetermined. Alternatively or additionally, definition(s) of "safe situation(s)" may be acquired by the processing circuitry performing the method **300,** as illustrated by **310.** Thus, in some examples, the method **300** comprises acquiring identification of a situation considered safe for brake system evaluation **310.**

When the vehicle is in a "safe situation" (Y-path out of **320**) the secondary brake system may be enabled (e.g., automatically) for functionality evaluation. In some examples, the secondary brake system is enabled for functionality evaluation when the vehicle is in a "safe situation" (Y-path out of **320**) only if a request for evaluation has been acquired in **315.**

The acquisition in **310** may be implemented in any suitable way. For example, definition(s) of "safe situation(s)" may be determined by the processing circuitry performing the method **300.** Alternatively or additionally, definition(s) of "safe situation(s)" may be received by the processing circuitry performing the method **300** (e.g., via a user interface comprised in the vehicle, via communication with other circuitry comprised in the vehicle, or via communication between the vehicle and a remote system). Yet alternatively or additionally, definition(s) of "safe situation(s)" may be provided by a remote control function, a vehicle assistance service, an autonomous drive function, a route planner, or the like (which may be comprised in the vehicle or in a remote system). For example, when planning a route by a route planner, locations associated with "safe situation(s)" may be identified (e.g., based on slope, straightness of road, traffic statistics, weather conditions, etc.) and provided to the processing circuitry performing the method **300.**

As illustrated by **370,** the measurements obtained in **340, 341, 342** and/or the functionality of the secondary brake system determined in **355** may be stored in association with respective time stamp(s). The method **300** comprises causing the measurements and/or determined functionality to be stored and any suitable storing circuitry may be used for this purpose (e.g., a memory associated with the processing circuitry performing the method **300,** or storing circuitry of a remote system). The processing circuitry performing the method **300** may be further configured to retrieve - from the storing circuitry - stored measurements and/or functionality determinations as needed.

In some examples, measurements according to **340** may be performed and stored at one or more measurement occasions, and the functionality may be determined according to **355** at a (later) evaluation occasion (possibly based on several measurement occasions). In some examples, functionality may be determined and stored according to **355** at one or more evaluation occasions, and a combined functionality metric (e.g., combination by averaging or filtering) based on several evaluation occasions may be used in **360** to determine whether or not to perform a safety enhancing action according to **365.**

In some examples, the secondary brake system may be evaluated for multiple conditions by using different braking requests in the triggering according to **335** (e.g., different wheels, different levels of force, etc.), and/or by applying different "safe situation(s)" in the safety gateway according to **320,** and/or by requesting evaluation according to **315** for different situations (e.g., standstill, in motion, etc.). The measurements and/or determined functionalities associated with such multiple conditions may then be combined to determine a consolidated result indicating the functionality of the secondary brake system.

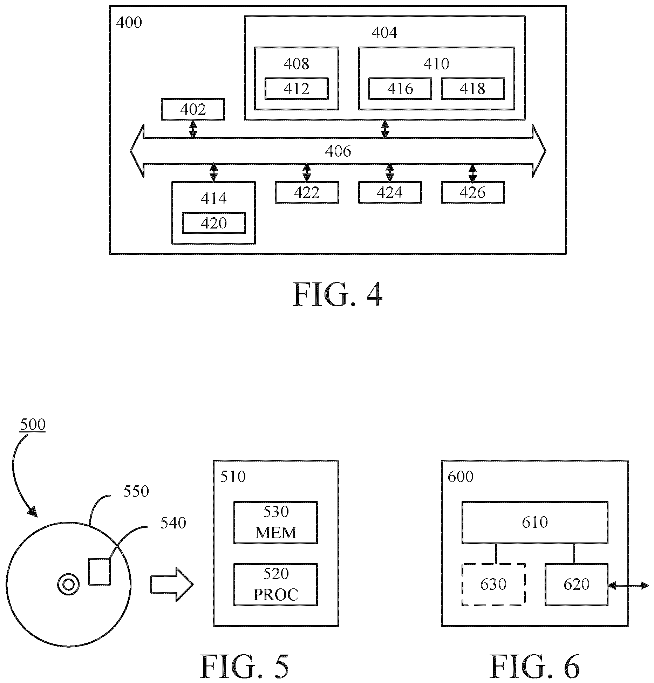

**FIG. 4** is a schematic diagram of a computer system **400** for implementing examples disclosed herein. The computer system **400** is adapted to execute instructions from a computer-readable medium to perform these and/or any of the functions or processing described herein. The computer system **400** may be connected (e.g., networked) to other machines in a LAN (Local Area Network), LIN (Local Interconnect Network), automotive network communication protocol (e.g., FlexRay), an intranet, an extranet, or the Internet. While only a single device is illustrated, the computer system **400** may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system **400** may comprise at least one computing device or electronic device capable of including firmware, hardware, and/or executing software instructions to implement the functionality described herein. The computer system **400** may include processing circuitry **402** (e.g., processing circuitry including one or more processor devices or control units), a memory **404,** and a system bus **406.** The computer system **400** may include at least one computing device having the processing circuitry **402.** The system bus **406** provides an interface for system components including, but not limited to, the memory **404** and the processing circuitry **402.** The processing circuitry **402** may include any number of hardware components for conducting data or signal processing or for executing computer code stored in memory **404.** The processing circuitry **402** may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry **402** may further include computer executable code that controls operation of the programmable device.

The system bus **406** may be any of several types of bus structures that may further interconnect to a memory bus (with or without a memory controller), a peripheral bus, and/or a local bus using any of a variety of bus architectures. The memory **404** may be one or more devices for storing data and/or computer code for completing or facilitating methods described herein. The memory **404** may include database components, object code components, script components, or other types of information structure for supporting the various activities herein. Any distributed or local memory device may be utilized with the systems and methods of this description. The memory **404** may be communicably connected to the processing circuitry **402** (e.g., via a circuit or any other wired, wireless, or network connection) and may include computer code for executing one or more processes described herein. The memory **404** may include non-volatile memory **408** (e.g., read-only memory (ROM), erasable programmable read-only memory (EPROM), electrically erasable programmable read-only memory (EEPROM), etc.), and volatile memory **410** (e.g., randomaccess memory (RAM)), or any other medium which can be used to carry or store desired program code in the form of machine-executable instructions or data structures and which can be accessed by a computer or other machine with processing circuitry **402.** A basic input/output system (BIOS) **412** may be stored in the non-volatile memory **408** and can include the basic routines that help to transfer information between elements within the computer system **400.**

The computer system **400** may further include or be coupled to a non-transitory computer-readable storage medium such as the storage device **414,** which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device **414** and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device **414** and/or in the volatile memory **410,** which may include an operating system **416** and/or one or more program modules **418.** All or a portion of the examples disclosed herein may be implemented as a computer program **420** stored on a transitory or non-transitory computer-usable or computer-readable storage medium (e.g., single medium or multiple media), such as the storage device **414,** which includes complex programming instructions (e.g., complex computer-readable program code) to cause the processing circuitry **402** to carry out actions described herein. Thus, the computer-readable program code of the computer program **420** can comprise software instructions for implementing the functionality of the examples described herein when executed by the processing circuitry **402.** In some examples, the storage device **414** may be a computer program product (e.g., readable storage medium) storing the computer program **420** thereon, where at least a portion of a computer program **420** may be loadable (e.g., into a processor) for implementing the functionality of the examples described herein when executed by the processing circuitry **402.** The processing circuitry **402** may serve as a controller or control system for the computer system **400** that is to implement the functionality described herein.

The computer system **400** may include an input device interface **422** configured to receive input and selections to be communicated to the computer system **400** when executing instructions, such as from a keyboard, mouse, touch-sensitive surface, etc. Such input devices may be connected to the processing circuitry **402** through the input device
interface **422** coupled to the system bus **406** but can be connected through other interfaces, such as a parallel port, an Institute of Electrical and Electronic Engineers (IEEE) 1394 serial port, a Universal Serial Bus (USB) port, an IR interface, and the like. The computer system **400** may include an output device interface **424** configured to forward output, such as to a display, a video display unit (e.g., a liquid crystal display (LCD) or a cathode ray tube (CRT)). The computer system **400** may include a communications interface **426** suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

The described examples and their equivalents may be realized in software or hardware or a combination thereof. The examples may be performed by general purpose circuitry. Examples of general purpose circuitry include digital signal processors (DSP), central processing units (CPU), co-processor units, field programmable gate arrays (FPGA) and other programmable hardware. Alternatively or additionally, the examples may be performed by specialized circuitry, such as application specific integrated circuits (ASIC). The general purpose circuitry and/or the specialized circuitry may, for example, be associated with or comprised in an electronic apparatus such as a vehicle control unit (VCU) or other suitable control unit.

The electronic apparatus may comprise arrangements, circuitry, and/or logic according to any of the examples described herein. Alternatively or additionally, the electronic apparatus may be configured to perform method steps according to any of the examples described herein.

According to some examples, a computer program product comprises a non-transitory computer readable medium such as, for example, a universal serial bus (USB) memory, a plug-in card, an embedded drive, or a read only memory (ROM). **FIG. 5** illustrates a computer program product **500** exemplified as a non-transitory computer-readable medium in the form of a compact disc (CD) ROM **550.** The computer-readable medium has stored thereon program code **540** comprising instructions. The program code is loadable into processing circuitry (PROC; e.g., a data processing unit) **520,** which may, for example, be comprised in a control unit **510** (e.g., a VCU). When loaded into the processing circuitry, the program code may be stored in a memory (MEM) **530** associated with, or comprised in, the processing circuitry. According to some examples, the program code may, when loaded into, and run by, the processing circuitry, cause execution of method steps according to, for example, any of the methods described herein.

**FIG. 6** schematically illustrates, in terms of a number of functional units, the components of a control unit **600** according to some examples. Processing circuitry **610** is provided using any combination of one or more of a suitable central processing unit CPU, multiprocessor, microcontroller, digital signal processor DSP, etc., capable of executing software instructions stored in a computer program product, e.g. in the form of a storage medium **630.** The processing circuitry **610** may further be provided as at least one application specific integrated circuit ASIC, or field programmable gate array FPGA.

Particularly, the processing circuitry **610** is configured to cause the control unit 600 to perform a set of operations, or steps, such as any of the methods discussed herein.

For example, the storage medium **630** may store the set of operations, and the processing circuitry **610** may be configured to retrieve the set of operations from the storage medium **630** to cause the control unit **600** to perform the set of operations. The set of operations may be provided as a set of executable instructions. Thus, the processing circuitry **610** is thereby arranged to execute methods as herein disclosed. In particular, there is disclosed a control unit **600** comprising processing circuitry **610,** an interface **620** coupled to the processing circuitry **610,** and a memory **630** coupled to the processing circuitry **610,** wherein the memory comprises machine readable computer program instructions that, when executed by the processing circuitry, causes the control unit to perform the methods discussed herein.

The storage medium **630** may also comprise persistent storage, which, for example, can be any single one or combination of magnetic memory, optical memory, solid state memory or even remotely mounted memory.

The control unit **600** may further comprise an interface **620** for communications with at least one external device. As such, the interface **620** may comprise one or more transmitters and receivers, comprising analogue and digital components and a suitable number of ports for wireline or wireless communication.

The processing circuitry **610** controls the general operation of the control unit **600,** e.g., by sending data and control signals to the interface **620** and the storage medium **630,** by receiving data and reports from the interface **620,** and by retrieving data and instructions from the storage medium **630.** Other components, as well as the related functionality, of the control node are omitted in order not to obscure the concepts presented herein.

### A non-exhaustive list of examples:

**Example 1:** A computer system for a vehicle comprising a primary brake system and a secondary brake system, wherein each of the primary and secondary brake systems is configured to control one or more brake actuators of the vehicle, the computer system comprising processing circuitry configured to: enable the secondary brake system; trigger braking control by the secondary brake system; obtain measurements of an output of the secondary brake system, wherein the output is for control of the one or more brake actuators, and wherein the measurements are indicative of a response of the secondary brake system to the triggered braking control; and determine a functionality of the secondary brake system by comparing the measurements of the output of the secondary brake system to a corresponding output of the primary brake system.
**Example 2:** The computer system of **Example 1,** wherein the processing circuitry is further configured to obtain measurements of an applied brake force by the one or more brake actuators responsive to the triggered braking control by the secondary brake system.
**Example 3:** The computer system of **Example 1,** wherein the processing circuitry is further configured to disable the one or more brake actuators before triggering braking control by the secondary brake system.
**Example 4:** The computer system of **Example 3,** wherein the processing circuitry is further configured to - when the secondary brake system is determined as functional: enable the one or more brake actuators; trigger further braking control by the secondary brake system; and obtain measurements of an applied brake force by the one or more brake actuators responsive to the triggered further braking control by the secondary brake system.
**Example 5:** The computer system of **Example 2** or **4,** wherein the processing circuitry is further configured to determine the functionality of the secondary brake system by comparing the measurements of the applied brake force by the one or more brake actuators responsive to the triggered braking control, or further braking control, by the secondary brake system to a corresponding brake force for the primary brake system.
**Example 6:** The computer system of any of **Examples 1-5,** wherein the processing circuitry is further configured to: acquire a request for evaluation of the secondary brake system, wherein enabling the secondary brake system is responsive to the request.
**Example** 7: The computer system of **Example 6,** wherein the processing circuitry is further configured to - when the secondary brake system is determined as non-functional while the vehicle is in motion - causing a safety enhancing action.
**Example 8:** The computer system of any of **Examples 1-7,** wherein the processing circuitry is further configured to acquire identification of a situation considered safe for brake system evaluation, wherein enabling the secondary brake system is performed automatically when the vehicle is in the identified situation.
**Example 9:** A vehicle comprising the computer system of any of **Examples 1-8,** the one or more brake actuators, the primary brake system, and the secondary brake system.
**Example 10:** A computer-implemented method for a vehicle comprising a primary brake system and a secondary brake system, wherein each of the primary and secondary brake systems is configured to control one or more brake actuators of the vehicle, the method comprising: enabling, by processing circuitry of a computer system, the secondary brake system; triggering, by the processing circuitry, braking control by the secondary brake system; obtaining, by the processing circuitry, measurements of an output of the secondary brake system, wherein the output is for control of the one or more brake actuators, and wherein the measurements are indicative of a response of the secondary brake system to the triggered braking control; and determining, by the processing circuitry, a functionality of the secondary brake system by comparing the measurements of the output of the secondary brake system to a corresponding output of the primary brake system.
**Example 11:** The method of **Example 10,** further comprising obtaining, by the processing circuitry, measurements of an applied brake force by the one or more brake actuators responsive to the triggered braking control by the secondary brake system.
**Example 12:** The method of **Example 10,** further comprising disabling, by the processing circuitry, the one or more brake actuators before triggering braking control by the secondary brake system.
**Example 13:** The method of **Example 12,** further comprising - when the secondary brake system is determined as functional: enabling, by the processing circuitry, the one or more brake actuators; triggering, by the processing circuitry, further braking control by the secondary brake system; and obtaining, by the processing circuitry, measurements of an applied brake force by the one or more brake actuators responsive to the triggered further braking control by the secondary brake system.
**Example 14:** The method of **Example 11** or **13,** wherein determining the functionality of the secondary brake system further comprises comparing, by the processing circuitry, the measurements of the applied brake force by the one or more brake actuators responsive to the triggered braking control, or further braking control, by the secondary brake system to a corresponding brake force for the primary brake system.
**Example 15:** The method of any of **Examples 10-14,** further comprising one or more of: storing, by the processing circuitry, the measurements in association with a time stamp; and storing, by the processing circuitry, the determined functionality of the secondary brake system in association with a time stamp.
**Example 16:** The method of any of **Examples 10-15,** further comprising: acquiring, by the processing circuitry, a request for evaluation of the secondary brake system, wherein enabling the secondary brake system is responsive to the request.
**Example 17:** The method of any of **Examples 10-16,** performed while the vehicle is in motion.
**Example 18:** The method of **Example 17,** further comprising - when the secondary brake system is determined as non-functional - causing, by the processing circuitry, a safety enhancing action.
**Example 19:** The method of **Example 18,** where the safety enhancing action comprises one or more of: performing a safe stop maneuver by the vehicle; alerting an operator of the vehicle; and disabling an autonomous drive mode of the vehicle.
**Example 20:** The method of any of **Examples 10-19,** further comprising acquiring, by the processing circuitry, identification of a situation considered safe for brake system evaluation, wherein enabling the secondary brake system is performed automatically when the vehicle is in the identified situation.
**Example 21:** A computer program product comprising program code for performing, when executed by the processing circuitry, the method of any of **Examples 10-20.**
**Example 22:** A non-transitory computer-readable storage medium comprising instructions, which when executed by the processing circuitry, cause the processing circuitry to perform the method of any of **Examples 10-20.**

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A computer system (190, 400) for a vehicle (100) comprising a primary brake system (210) and a secondary brake system (220), wherein each of the primary and secondary brake systems is configured to control one or more brake actuators (130, 230) of the vehicle, the computer system comprising processing circuitry configured to:
enable the secondary brake system;
trigger braking control by the secondary brake system;
obtain measurements of an output (223) of the secondary brake system, wherein the output is for control of the one or more brake actuators, and wherein the measurements are indicative of a response of the secondary brake system to the triggered braking control; and
determine a functionality of the secondary brake system by comparing the measurements of the output of the secondary brake system to a corresponding output (213) of the primary brake system.

2. A vehicle (100) comprising the computer system (190, 400) of claim 1, the one or more brake actuators (130, 230), the primary brake system (210), and the secondary brake system (220).

3. A computer-implemented method (300) for a vehicle (100) comprising a primary brake system (210) and a secondary brake system (220), wherein each of the primary and secondary brake systems is configured to control one or more brake actuators (130, 230) of the vehicle, the method comprising:
enabling (325), by processing circuitry of a computer system (190, 400), the secondary brake system;
triggering (335), by the processing circuitry, braking control by the secondary brake system;
obtaining (340, 341), by the processing circuitry, measurements of an output (223) of the secondary brake system, wherein the output is for control of the one or more brake actuators, and wherein the measurements are indicative of a response of the secondary brake system to the triggered braking control; and
determining (355), by the processing circuitry, a functionality of the secondary brake system by comparing (356) the measurements of the output of the secondary brake system to a corresponding output (213) of the primary brake system.

4. The method of claim 3, further comprising obtaining (340, 342), by the processing circuitry, measurements of an applied brake force (233) by the one or more brake actuators responsive to the triggered braking control by the secondary brake system.

5. The method of claim 3, further comprising disabling (330), by the processing circuitry, the one or more brake actuators before triggering braking control by the secondary brake system.

6. The method of claim 5, further comprising - when (360) the secondary brake system is determined as functional:
enabling (380), by the processing circuitry, the one or more brake actuators;
triggering (335), by the processing circuitry, further braking control by the secondary brake system; and
obtaining (340, 342), by the processing circuitry, measurements of an applied brake force (233) by the one or more brake actuators responsive to the triggered further braking control by the secondary brake system.

7. The method of claim 4 or 6, wherein determining the functionality of the secondary brake system further comprises comparing (356), by the processing circuitry, the measurements of the applied brake force (233) by the one or more brake actuators responsive to the triggered braking control, or further braking control, by the secondary brake system to a corresponding brake force (233) for the primary brake system.

8. The method of any of claims 3-7, further comprising one or more of:
storing (370), by the processing circuitry, the measurements in association with a time stamp; and
storing (370), by the processing circuitry, the determined functionality of the secondary brake system in association with a time stamp.

9. The method of any of claims 3-8, further comprising:
acquiring (315), by the processing circuitry, a request for evaluation of the secondary brake system, wherein enabling the secondary brake system is responsive to the request.

10. The method of any of claims 3-9, performed while the vehicle is in motion.

11. The method of claim 10, further comprising - when (360) the secondary brake system is determined as non-functional - causing (365), by the processing circuitry, a safety enhancing action.

12. The method of claim 11, where the safety enhancing action comprises one or more of:
performing (366) a safe stop maneuver by the vehicle;
alerting (367) an operator of the vehicle; and
disabling (368) an autonomous drive mode of the vehicle.

13. The method of any of claims 3-12, further comprising acquiring (310), by the processing circuitry, identification of a situation considered safe for brake system evaluation, wherein enabling the secondary brake system is performed automatically when (320) the vehicle is in the identified situation.

14. A computer program product (500) comprising program code for performing, when executed by the processing circuitry, the method of any of claims 3-12.

15. A non-transitory computer-readable storage medium (550) comprising instructions, which when executed by the processing circuitry, cause the processing circuitry to perform the method of any of claims 3-13.

## Amended claims

### Amended claims in accordance with Rule 137(2) EPC.

1. A computer system (190, 400) for a vehicle (100) comprising a primary brake system (210) and a secondary brake system (220), wherein each of the primary and secondary brake systems is configured to control one or more brake actuators (130, 230) of the vehicle, the computer system comprising processing circuitry configured to:
enable the secondary brake system;
trigger braking control by the secondary brake system;
obtain measurements of an output (223) of the secondary brake system while the one or more brake actuators are disabled or left under control by the primary brake system, wherein the output is for control of the one or more brake actuators, and wherein the measurements are indicative of a response of the secondary brake system to the triggered braking control; and
determine a functionality of the secondary brake system by comparing the measurements of the output of the secondary brake system to a corresponding output (213) of the primary brake system.

2. A vehicle (100) comprising the computer system (190, 400) of claim 1, the one or more brake actuators (130, 230), the primary brake system (210), and the secondary brake system (220).

3. A computer-implemented method (300) for a vehicle (100) comprising a primary brake system (210) and a secondary brake system (220), wherein each of the primary and secondary brake systems is configured to control one or more brake actuators (130, 230) of the vehicle, the method comprising:
enabling (325), by processing circuitry of a computer system (190, 400), the secondary brake system;
triggering (335), by the processing circuitry, braking control by the secondary brake system;
obtaining (340, 341), by the processing circuitry, measurements of an output (223) of the secondary brake system while the one or more brake actuators are disabled or left under control by the primary brake system, wherein the output is for control of the one or more brake actuators, and wherein the measurements are indicative of a response of the secondary brake system to the triggered braking control; and
determining (355), by the processing circuitry, a functionality of the secondary brake system by comparing (356) the measurements of the output of the secondary brake system to a corresponding output (213) of the primary brake system.

4. The method of claim 3, further comprising disabling (330), by the processing circuitry, the one or more brake actuators before triggering braking control by the secondary brake system.

5. The method of claim 4, further comprising - when (360) the secondary brake system is determined as functional:
enabling (380), by the processing circuitry, the one or more brake actuators;
triggering (335), by the processing circuitry, further braking control by the secondary brake system; and
obtaining (340, 342), by the processing circuitry, measurements of an applied brake force (233) by the one or more brake actuators responsive to the triggered further braking control by the secondary brake system.

6. The method of claim 5, wherein determining the functionality of the secondary brake system further comprises comparing (356), by the processing circuitry, the measurements of the applied brake force (233) by the one or more brake actuators responsive to the triggered braking control, or further braking control, by the secondary brake system to a corresponding brake force (233) for the primary brake system.

7. The method of any of claims 3-6, further comprising one or more of:
storing (370), by the processing circuitry, the measurements in association with a time stamp; and
storing (370), by the processing circuitry, the determined functionality of the secondary brake system in association with a time stamp.

8. The method of any of claims 3-7, further comprising:
acquiring (315), by the processing circuitry, a request for evaluation of the secondary brake system, wherein enabling the secondary brake system is responsive to the request.

9. The method of any of claims 3-8, performed while the vehicle is in motion.

10. The method of claim 9, further comprising - when (360) the secondary brake system is determined as non-functional - causing (365), by the processing circuitry, a safety enhancing action.

11. The method of claim 10, where the safety enhancing action comprises one or more of:
performing (366) a safe stop maneuver by the vehicle;
alerting (367) an operator of the vehicle; and
disabling (368) an autonomous drive mode of the vehicle.

12. The method of any of claims 3-11, further comprising acquiring (310), by the processing circuitry, identification of a situation considered safe for brake system evaluation, wherein enabling the secondary brake system is performed automatically when (320) the vehicle is in the identified situation.

13. A computer program product (500) comprising program code for performing, when executed by the processing circuitry, the method of any of claims 3-12.

14. A non-transitory computer-readable storage medium (550) comprising instructions, which when executed by the processing circuitry, cause the processing circuitry to perform the method of any of claims 3-12.
